# EUROPEAN PATENT APPLICATION

(11) **EP 2 402 719 A1**
(43) Date of publication of application: **04.01.2012**
(21) Application number: 10746071.9
(22) Date of filing: 05.02.2010
(51) Int. Cl.: G01D 5/245, G01D 5/244

(54) **ROTATION DETECTION DEVICE**

(30) Priority: 26.02.2009 JP 2009044654
(71) Applicant: Alps Electric Co., Ltd., Tokyo 145-8501 (JP)
(72) Inventor: TAKETANI, Hiroaki, Tokyo 145-8501 (JP); TAKEYA, Tsutomu, Tokyo 145-8501 (JP); ASAHINA, Hiroyuki, Tokyo 145-8501 (JP)
(74) Representative: Klunker . Schmitt-Nilson . Hirsch
(86) International application number: PCT/JP2010/051676
(87) International publication number: WO 2010/098190

(57) **Abstract**

A rotation detection device includes a gear-shaped magnetic body (2) including projections (6) arranged on an outer circumferential side surface of the magnetic body at intervals in a rotation direction of the magnetic body so as to project in a direction away from the center of rotation of the magnetic body; a magnet (3) disposed above a projection and depression section (8) of the gear-shaped magnetic body (2); and a magnetic sensor (4) disposed below the projection and depression section (8). The magnet (3) is magnetized in a direction (X-direction) parallel to the radial direction of the gear-shaped magnetic body (2); When the gear-shaped magnetic body (2) rotates, the magnetic sensor (4) and the magnet (3) alternately face projections (6) and depressions (7); In this case, a magnetic field acting on the magnetic sensor (4) changes between when the projection of the gear-shaped magnetic body (2) is detected and when the depression (7) of the gear-shaped magnetic body (2) is detected, whereby the output of the magnetic sensor (4) changes; Thus, the rotation of the gear-shaped magnetic body (2) can be detected.

## Description

### Technical Field

The present invention relates to a rotation detection device which includes a magnetic body, a magnetic sensor, and a magnet, and which is capable of detecting rotation.

### Background Art

A moving body detection device which includes a magnetic rotator, a bias magnetic field generation means, a magnetism detection section, and a square-wave signal generation circuit is disclosed in PTL 1.

As shown in Fig. 1 of PTL 1, for example, an approximately sawtooth-shaped pattern is formed on the outer circumferential surface of the magnetic rotator, and the magnetism detection section and the bias magnetic field generation means are disposed at positions spaced laterally from the outer circumferential surface.

In PTL 1, a tangential component of a magnetic field acting on the magnetism detection section which is a component in a direction tangential to the rotation direction of the magnetic rotator changes depending on its facing relation with the rotating magnetic rotator, whereby the output of the magnetic field generation means changes. In this way, the rotation state of the magnetic rotator is detected.

However, in the configuration of PTL 1, in particular, when the magnetic rotator is eccentric, the magnetic field component acting on the magnetism detection section is likely to fluctuate. Thus, it is difficult to detect rotation with high accuracy.

Moreover, it is necessary to regulate the distance between the magnetic rotator and the magnetism detection section with high accuracy, which changes with the rotation of the magnetic rotator, and detection accuracy is likely to become unstable.

### Citation List

### Patent Literature

[PTL 1] Japanese Unexamined Patent Application Publication No. 2009-8519

### Summary of Invention

### Technical Problem

The invention has been made in view of the problems of the related art; an advantage of some aspects of the invention is to provide a rotation detection device capable of detecting rotation stably and with high accuracy.

### Solutions to Problem

According to an aspect of the invention, there is provided a rotation detection device including:
a gear-shaped magnetic body including an upper surface, a lower surface, an outer circumferential side surface that connects outer circumferential edges of the upper and lower surfaces, and projections arranged at intervals in a relative rotation direction of the outer circumferential side surface so as to project in a direction away from a center of relative rotation which is at the center of the upper and lower surfaces; and
a magnetic sensor which is disposed at one side of upper and lower sides of a projection and depression section in which the projections of the gear-shaped magnetic body and depressions positioned between the projections are continuous in the relative rotation direction, and includes a magnetism detection element of which the electrical property changes in response to a magnetic field; and a magnet which is disposed at the other side of the upper and lower sides of the projection and depression section in proximity to the magnetic sensor in a height direction thereof, and in which a pair of the magnetic sensor and the magnet constitutes a stationary side or a movable side,
wherein the magnet is magnetized in a direction parallel to a radial direction which extends from the center of relative rotation of the gear-shaped magnetic body toward the outer circumferential edge, and
wherein the rotation detection device is capable of detecting rotation based on the output of the magnetic sensor which varies in response to a change in a magnetic field acting on the magnetic sensor between when the projection of the gear-shaped magnetic body is detected and when the depression of the gear-shaped magnetic body is detected.

In the above aspect of the invention, the magnetic sensor and the magnet are disposed above and below the projection and depression section, respectively, which is formed on the outer circumference of the gear-shaped magnetic body, and when the gear-shaped magnetic body is rotated, for example, the magnetic sensor and the magnet alternately face the projection and the depression of the gear-shaped magnetic body. In this case, since the magnetic field acting on the magnetic sensor changes between when the projection of the gear-shaped magnetic body is detected and when the depression of the gear-shaped magnetic body is detected, the output of the magnetic sensor can be changed. Thus, it is possible to detect rotation based on the output of the magnetic sensor.

In the above aspect of the invention, since the magnetic sensor and the magnet are disposed with a gap formed above and below the gear-shaped magnetic body, even when the gear-shaped magnetic body is eccentric and shifted in the horizontal direction, the effect on the magnetic field acting on the magnetic sensor can be suppressed. Moreover, by appropriately regulating the gaps of the magnetic sensor and the magnet with respect to the gear-shaped magnetic body, it is possible to detect rotation stably and with high accuracy.

In the above aspect of the invention, it is preferable that the magnetic sensor be a magnetic switch that generates ON/OFF signals depending on the positive/negative directions of the magnetic field.
It is also preferable that when a height direction from the center of the magnetic sensor is a Z-direction, a direction parallel to the radial direction of the gear-shaped magnetic body, passing through the center of the magnetic sensor is a Y-direction, and a direction orthogonal to both the Z and Y-directions is an X-direction, the magnetic sensor be disposed so that the magnetic field detection direction thereof is the Z-direction.

According to experiments described later, it was understood that the direction of the Z-direction magnetic field acting on the magnetic sensor was inverted between when the projection of the gear-shaped magnetic body was detected and when the depression of the gear-shaped magnetic body was detected. Therefore, by setting the magnetic field detection direction of the magnetic sensor to the Z-direction, it is possible to appropriately detect rotation using the magnetic sensor which is the magnetic switch.

Moreover, in the above aspect of the invention, it is preferable that the magnetic sensor be a magnetic switch that generates ON/OFF signals depending on the positive/negative directions of the magnetic field.
It is also preferable that when a height direction from the center of the magnetic sensor is a Z-direction, a direction parallel to the radial direction of the gear-shaped magnetic body, passing through the center of the magnetic sensor is a Y-direction, and a direction orthogonal to both the Z and Y-directions is an X-direction, the magnetic sensor be disposed so that the magnetic field detection direction thereof is the X-direction.
It is also preferable that a gap in the X-direction be formed between the center of the magnetic sensor and the center of the magnet.

According to experiments described later, it was understood that when the magnetic sensor was shifted in the X-direction with respect to the magnet, the direction of the X-direction magnetic field acting on the magnetic sensor was inverted between when the projection of the gear-shaped magnetic body was detected and when the depression of the gear-shaped magnetic body was detected. Therefore, by setting the magnetic field detection direction of the magnetic sensor to the X-direction and disposing the magnetic sensor so as to be shifted in the X-direction with respect to the magnet, it is possible to appropriately detect rotation using the magnetic sensor which is the magnetic switch.

Moreover, in the above aspect of the invention, it is preferable that the magnetic sensor be disposed to be shifted with respect to the magnet so that the center of the magnetic sensor is positioned closer to a distal end of the projection and depression section of the gear-shaped magnetic body than the center of the magnet. In this way, the change in the intensity of the magnetic field is increased, and it is possible to detect rotation with high accuracy.

Moreover, in the above aspect of the invention, it is preferable that a gap G1 in the height direction between the magnetic sensor and the projection of the gear-shaped magnetic body be smaller than a gap G2 in the height direction between the magnet and the projection of the gear-shaped magnetic body. In this way, it is possible to increase the intensity of the magnetic field acting on the magnetic sensor and to detect rotation with high accuracy.

Moreover, in the above aspect of the invention, it is preferable that a rotation reference section in which a width between the projection and the adjacent depression is different from a width between the other projections and depressions be formed in the projection and depression section that is formed in the gear-shaped magnetic body. In this way, it is easy to define the point of origin of rotation and to know the rotation direction.

### Advantageous Effects of Invention

According to the rotation detection device, it is possible to stably perform rotation detection with high accuracy, compared to the related art.

### Brief Description of Drawings

Fig. 1 is a partially enlarged perspective view of a rotation detection device according to a first embodiment.
Fig. 2 is an exemplary planar view of a gear-shaped magnetic body.
Fig. 3 is a partially enlarged front view of the rotation detection device.
Fig. 4 is a side view showing a preferred layout of the rotation detection device of the first embodiment.
Fig. 5 is a circuit configuration diagram of a magnetic sensor of the present embodiment.
Fig. 6 is a vertical cross-sectional view showing the layer configuration of a magnetism detection element used in the magnetic sensor.
Fig. 7 shows the RH curve of the magnetism detection element.
Figs. 8A to 8C are graphs showing the relation between a gear rotation direction and a Z-direction component of a magnetic field (magnetic flux density) acting on the magnetic sensor when a gap G1 in the height direction (Z-direction) between a projection of the gear-shaped magnetic body shown in Fig. 4 and the magnetic sensor is changed.
Fig. 9 is a schematic view illustrating the advantageous effect of disposing the magnetic sensor close to the distal end side of the gear-shaped magnetic body.
Fig. 10 is a side view of a rotation detection device according to a second embodiment.
Fig. 11 is a graph showing the relation between a gear rotation angle and an X-direction component of a magnetic field (magnetic flux density) acting on a magnetic sensor when the rotation detection device of Fig. 10 is used.
Fig. 12 is a graph showing the relation between a gear rotation angle and an X-direction component of a magnetic field (magnetic flux density) acting on a magnetic sensor according to a comparative example.
Fig. 13 is a graph showing the relation between a gear rotation angle and a Y-direction component of a magnetic field (magnetic flux density) acting on a magnetic sensor.
Fig. 14 is a graph showing the relation between a gear rotation angle and an X-direction component of a magnetic field (magnetic flux density) acting on a magnetic sensor according to a comparative example.

### Description of Embodiments

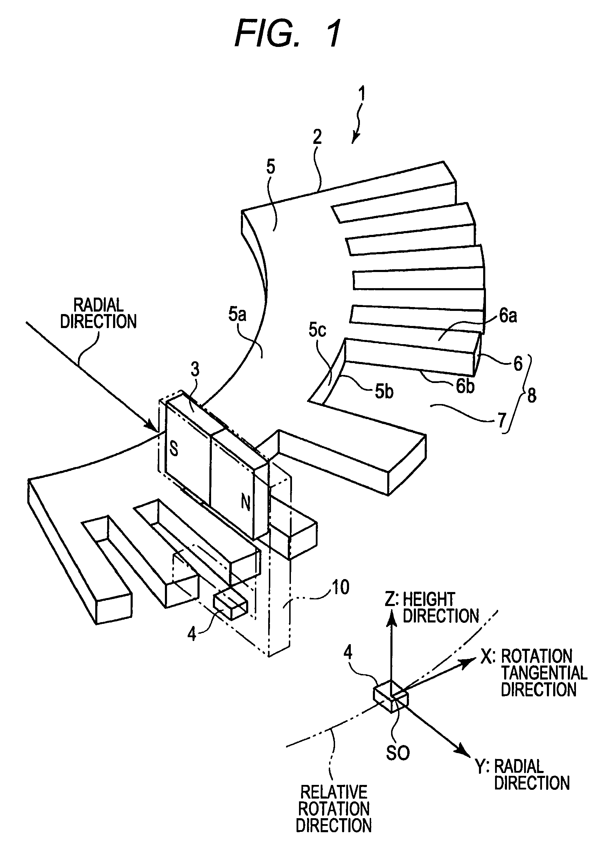

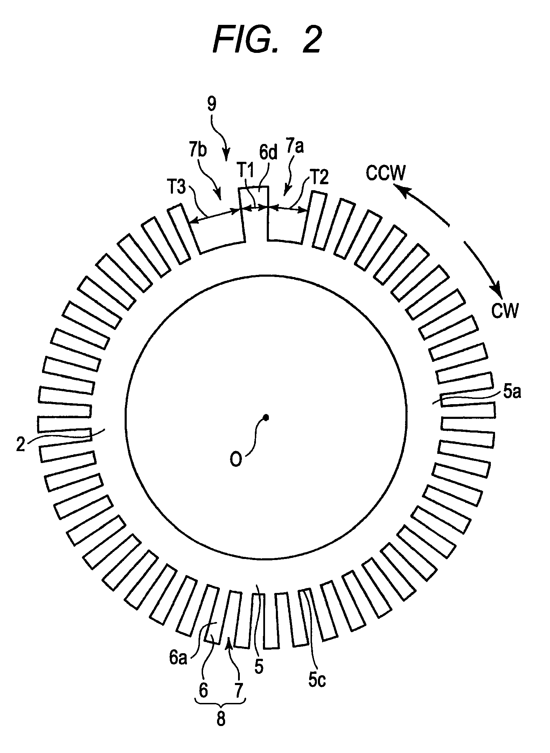

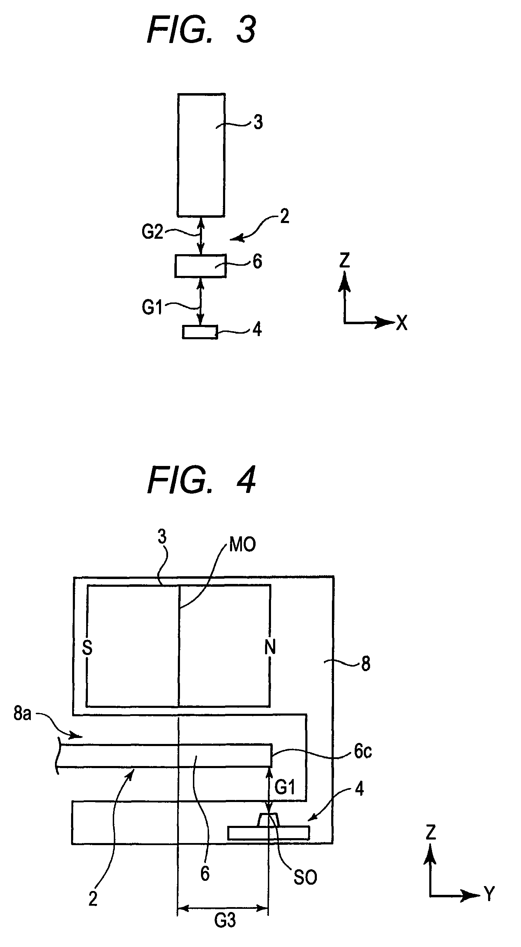

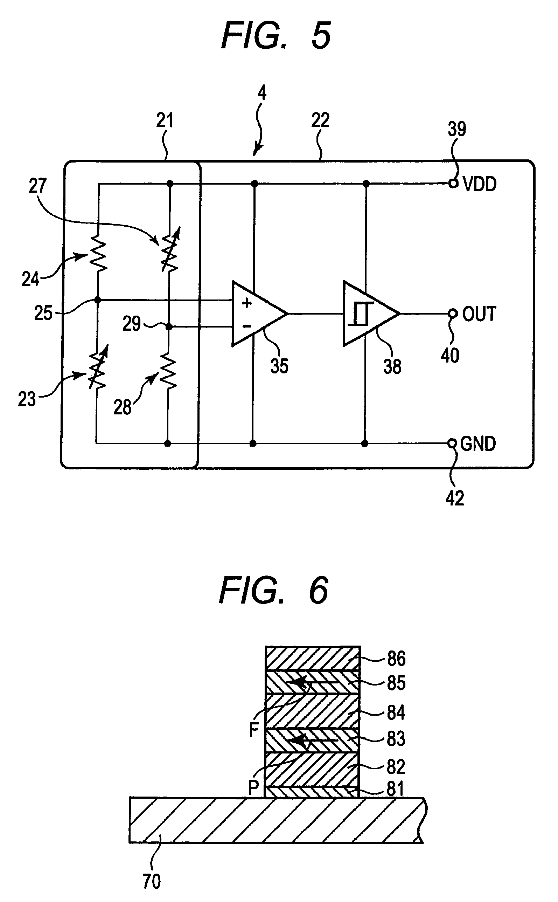

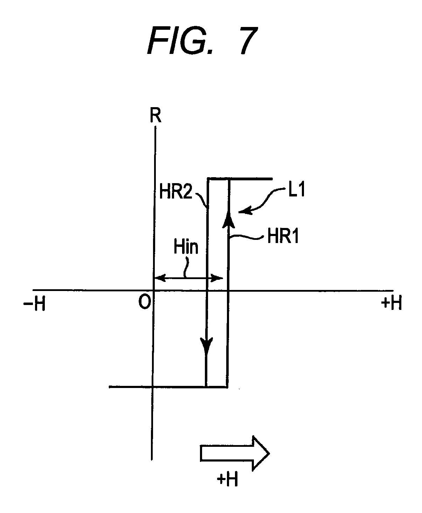

Fig. 1 is a partially enlarged perspective view of a rotation detection device according to a first embodiment; Fig. 2 is an exemplary planar view of a gear-shaped magnetic body; Fig. 3 is a partially enlarged front view of the rotation detection device; Fig. 4 is a side view showing a preferred layout of the rotation detection device of the first embodiment; Fig. 5 is a circuit configuration diagram of a magnetic sensor of the present embodiment; Fig. 6 is a vertical cross-sectional view showing the layer configuration of a magnetism detection element used in the magnetic sensor; Fig. 7 shows the RH curve of the magnetism detection element;

A rotation detection device 1 shown in Fig. 1 is configured to include a gear-shaped magnetic body 2, a magnet 3, and a magnetic sensor 4.

The gear-shaped magnetic body 2 shown in Figs. 1 and 2 is formed of an Fe-series soft magnetic body, for example. For example, the gear-shaped magnetic body 2 is configured to include a ring-shaped section 5 and a number of projections 6 formed on an outer circumferential side surface 5c connecting the outer circumferential edges of upper and lower surfaces 5a and 5b of the ring-shaped section 5.

The center of the gear-shaped magnetic body 2 is the center of rotation O. In this embodiment, the gear-shaped magnetic body 2 is supported so as to be rotatable in the clockwise (CW) and counter-clockwise (CCW) directions with the center of rotation O as the axis of rotation.

The projections 6 are arranged at intervals in the rotation direction (CW and CCW) of the outer circumferential side surface 5c so as to project in a direction away from the center of rotation O. The upper and lower surfaces 6a and 6b of the projections 6 are flat surfaces that are flush with the upper and lower surfaces 5a and 5b of the ring-shaped section 5.

As shown in Fig. 2, the projections 6 have a constant width except for one large-width projection 6d. As shown in Fig. 2, a width T1 of the large-width projection 6d is larger than the width of the other projections 6.

Moreover, depressions 7 positioned between the adjacent projections 6 and 6 have a constant width except for two large-width depressions 7a and 7b. In addition, a width T2 of the large-width depression 7a is different from a width T3 of the large-width depression 7b.

As above, a projection and depression section 8 in which the projections 6 and the depressions 7 are alternately arranged to be continuous in the rotation direction is formed on the outer circumferential side surface 5c of the gear-shaped magnetic body 2.

As shown in Fig. 1, the magnet 3 is fixedly disposed above the projection and depression section 8 of the gear-shaped magnetic body 2. As shown in Fig. 3, a gap G2 is formed between the magnet 3 and the projections 6 of the gear-shaped magnetic body 2. The magnet 3 is magnetized in a direction parallel to a radial direction which extends from the center of rotation O of the gear-shaped magnetic body 2 toward the outer circumferential edge. That is, as depicted in Fig. 1, a side surface (magnetization surface) of the magnet 3 facing the outer side of the gear-shaped magnetic body 2 is magnetized to the N polarity, for example, and a side surface (magnetization surface) of the magnet 3 facing the center of rotation O of the gear-shaped magnetic body 2 is magnetized to the S polarity, for example.

The magnetic sensor 4 is fixedly disposed below the projection and depression section 8 of the gear-shaped magnetic body 2. As shown in Fig. 3, a gap G1 is formed between the magnetic sensor 4 and the projections 6 of the gear-shaped magnetic body 2. The gap G1 is preferably in the range of 1.0 to 2.5 mm, and the gap G2 is preferably in the range of 1. 0 to 2. 5 mm, for example.

The magnetic sensor 4 is a magnetic switch that generates ON/OFF signals depending on the positive/negative directions of a magnetic field.

The magnet 3 and the magnetic sensor 4 are formed inside a housing 10 which includes a depression 8a at a position facing the projections 6 of the gear-shaped magnetic body 2 (see Figs. 1 and 4). The housing 10 is supported on a supporting substrate (not shown) and fixed.

The magnetic sensor 4 is configured to include a resistance element section 21 and an integrated circuit (IC) 22.
The resistance element section 21 includes a bridge circuit which is formed of two magnetism detection elements 23 and 27 and two fixed resistance elements 24 and 28. A midpoint between the magnetism detection element 23 and the fixed resistance element 24 and a midpoint between the magnetism detection element 27 and the fixed resistance element 28 are output sections 25 and 29 of the bridge circuit, respectively.

As shown in Fig. 5, a differential amplifier 35, a comparator 38, and if necessary, a latch circuit (not shown), a clock circuit, and the like are formed in the integrated circuit 22.

As shown in Fig. 5, the output sections 25 and 29 of the bridge circuit are connected to the input side of the differential amplifier 35. Moreover, an input section of the comparator 38 is connected to an output section of the differential amplifier 35, and an output section of the comparator 38 is connected to an external output terminal 40.

The magnetism detection elements 23 and 27 are GMR elements that exhibit a giant magneto-resistance effect (GMR effect) based on a change in magnetic field.

As shown in Fig. 6, the magnetism detection elements 23 and 27 have a configuration in which an underlying layer 81, an anti-ferromagnetic layer 82, a fixed magnetization layer 83, a non-magnetic layer 84, a free magnetization layer 85, and a protective film 86 are stacked on a substrate 70 in that order from the bottom. The underlying layer 81 is formed of Ta, for example. The anti-ferromagnetic layer 82 is formed of IrMn or PtMn. The fixed magnetization layer 83 and the free magnetization layer 85 are formed of a magnetic material such as a CoFe alloy, NiFe alloy, or a CoFeNi alloy. Moreover, the non-magnetic layer 84 is formed of Cu or the like. Moreover, the protective film 86 is formed of Ta or the like. The fixed magnetization layer 83 and the free magnetization layer 85 may have a laminated ferri structure (which is a laminated structure of a magnetic layer, a non-magnetic layer, and a magnetic layer, in which the magnetization directions of the two magnetic layers interposing the non-magnetic layer are anti-parallel to each other). Moreover, the fixed magnetization layer 83 and the free magnetization layer 85 may have a laminated structure of a plurality of magnetic layers of different materials.

Since the magnetism detection elements 23 and 27 have the anti-ferromagnetic layer 82 and the fixed magnetization layer 83 which are in contact with each other, when a magnetic-field heat treatment is performed, an exchange coupling field (Hex) is generated at the interface between the anti-ferromagnetic layer 82 and the fixed magnetization layer 83. Thus, the magnetization direction (indicated by the arrow P) of the fixed magnetization layer 83 is fixed to one direction. Moreover, the magnetization direction (indicated by the arrow F) of the free magnetization layer 85 in the no-field state (when no magnetic field acts thereon) is the same as the magnetization direction (indicated by the arrow P) of the fixed magnetization layer 83, for example.

Fig. 7 shows the RH curve of the magnetism detection elements 23 and 27. As shown in Fig. 7, when a magnetic field H is gradually increased in the positive direction (+H) from the no-field state (magnetic field: zero), the parallel state of the magnetization direction (indicated by the arrow F) of the free magnetization layer 85 and the magnetization direction (indicated by the arrow P) of the fixed magnetization layer 83 collapses and approaches an anti-parallel state. Thus, the resistance values R of the magnetism detection elements 23 and 27 gradually increase along the curve HR1. When the positive-direction (+H) magnetic field H is gradually decreased toward zero, the resistance values R of the magnetism detection element 23 and 27 gradually decrease along the curve HR2. As above, in the RH curve of the magnetism detection elements 23 and 27, a loop section L1 surrounded by the curves HR1 and HR2 is formed as the intensity of the positive-direction (+H) magnetic field H changes. The central value of the width of the loop section L1 which is the intermediate value of the maximum and minimum resistance values of the magnetism detection elements 23 and 27 is a "midpoint" of the loop section L1. Moreover, the magnitude of an interlayer coupling field Hin1 acting between the free magnetization layer 85 and the fixed magnetization layer 83 is determined by the intensity of the magnetic field at the midpoint of the loop section L1. As shown in Fig. 7, the intermediate coupling field Hin shifts in the direction of the positive-direction (+H) magnetic field.

Thus, the magnetic sensor 4 having a circuit configuration shown in Fig. 5 detects a magnetic field only when the magnetic field H is applied from the positive direction (+H) but does not detect a negative-direction (-H) magnetic field H. Moreover, when a positive-direction (+H) magnetic field H of a predetermined intensity acts on the magnetic sensor 4, the comparator 38 generates an ON signal, for example, in response to an output voltage input from the differential amplifier 35, and the ON signal is output from the external output terminal 40. On the other hand, when a negative-direction (-H) magnetic field H is applied, an OFF signal is output. In addition, a threshold level (threshold value) of a predetermined magnitude may be set in the comparator 38 so that the ON signal can be output when a magnetic field of a predetermined magnitude or greater is applied. By doing so, it is possible to suppress a variation in the output in response to a very small change in the magnetic field to thereby suppress an erroneous signal output.

The magnetic sensor 4 shown in Fig. 5 is a unipolar single-output magnetic switch. In contrast, a bridge circuit including a magnetism detection element for detecting a negative-direction (-H) magnetic field H may be further provided to thereby form a bipolar dual-output magnetic switch which includes two external output terminals 40. In the bipolar dual-output magnetic switch, one external output terminal 40 may be connected to a bridge circuit which includes a magnetism detection element for detecting a positive-direction (+H) magnetic field H, and the external output terminal 40 may output the ON signal when the positive-direction (+H) magnetic field H is applied. On the other hand, the other external output terminal 40 may be connected to a bridge circuit which includes a magnetism detection element for detecting a negative-direction (-H) magnetic field H, and the external output terminal 40 may output the ON signal when the negative-direction (-H) magnetic field H is applied.

As shown in Fig. 1, it is assumed that a height direction from the center SO of the magnetic sensor 4 is a Z-direction, a direction parallel to the radial direction of the gear-shaped magnetic body 2, passing through the center SO of the magnetic sensor 4 is a Y-direction, and a direction orthogonal to both the Z and Y-directions is an X-direction. The X-direction is a tangential line in a relative rotation direction with a tangential point at the center SO of the magnetic sensor 4. In addition, the X, Y, and Z-directions are applied in common to all the following embodiments.

In the first embodiment shown in Fig. 1, the magnetic sensor 4 is disposed so that the magnetization direction (indicated by the arrow P) of the fixed magnetization layer 83 is parallel to the Z-direction. For example, the magnetization direction (indicated by the arrow P) of the fixed magnetization layer 83 faces downward. The magnetic field detection direction of the magnetic sensor 4 can be regulated by the magnetization direction (indicated by the arrow P) of the fixed magnetization layer 83. In this embodiment, the magnetic field detection direction of the magnetic sensor 4 is set to the Z-direction.

Moreover, as shown in Fig. 4, the magnetic sensor 4 is disposed to be shifted in the Y-direction with respect to the magnet 3 so that the center SO of the magnetic sensor 4 is positioned closer to a distal end 6c of the projection 6 of the gear-shaped magnetic body 2 than the center MO of the magnet 3.

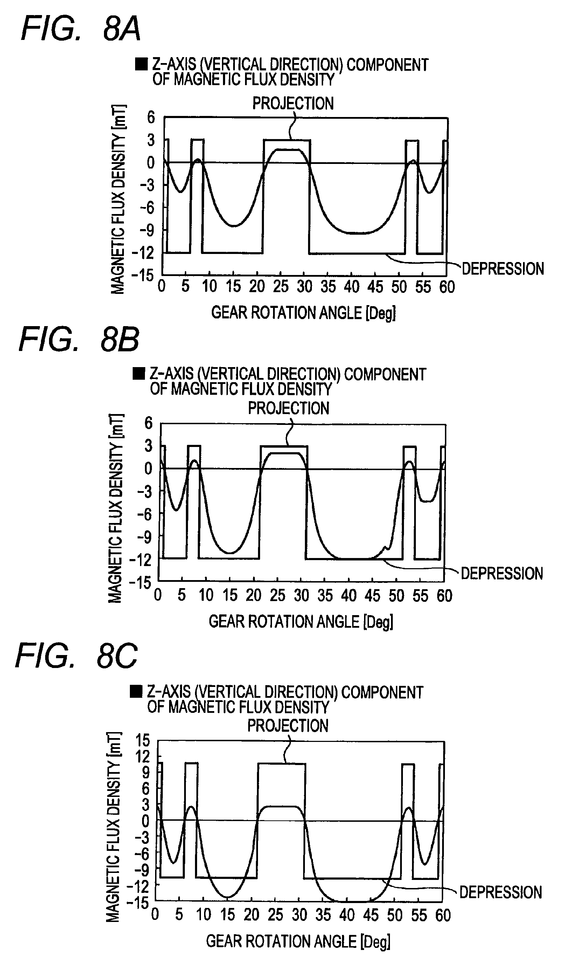

Figs. 8A to 8C are graphs showing the relation between a gear rotation direction and a Z-direction component of a magnetic field (magnetic flux density) acting on the magnetic sensor 4 when the gap G1 between the projection 6 of the gear-shaped magnetic body 2 shown in Fig. 4 and the magnetic sensor 4 is changed.

In the experiment of Figs. 8A to 8C, the gap G2 between the magnet 3 and the gear-shaped magnetic body 2 was fixed to 3.5 mm. The total number of projections of the gear-shaped magnetic body 2 being used was 44, the width (excluding the large-width projection 6d) of the projection 6 was 4.75 mm, and the width (excluding the large-width depressions 7a and 7b) of the depression 7 was 4.75 mm. Moreover, the width of the large-width projection 6d was 7.125 mm, and the widths of the large-width depressions 7a and 7c were 14.25 mm (T2) and 23.75 mm (T3), respectively. Moreover, the gear-shaped magnetic body 2 was formed of a SUS400-series soft magnetic body and had a thickness of 1 mm. The magnet 3 being used was a sintered samarium-cobalt magnet, the length in the Y-direction was 15 mm, and the width and thickness in the Z-direction were 10 mm and 2.5 mm, respectively. Moreover, a gap G3 in the Y-direction between the center MO of the magnet 3 and the center SO of the magnetic sensor 4 was 6 mm.

Moreover, the magnet 3 and the magnetic sensor 4 had a positional relation such that they face each other in the height direction (Z-direction) on the X-Z plane as shown in Fig. 3 (that is, the center MO of the magnet 3 and the center SO of the magnetic sensor 4 were not shifted in the X-direction).

The gap G1 was set to 3 mm, 2.5 mm, and 2.0 mm in the experiments of Figs. 8A, 8B, and 8C, respectively.

In the graphs of Figs. 8A to 8C, the shape of the projection and depression section 8 of the gear-shaped magnetic body 2 is also depicted by a solid line together with the gear rotation angle.

The vertical axis shown in Figs. 8A to 8C indicates a Z-direction component of a magnetic field (magnetic flux density) acting on the magnetic sensor 4 when the magnet 3 and the magnetic sensor 4 face the projection 6 and the depression 7 of the gear-shaped magnetic body 2. As shown in Figs. 8A to 8C, the direction of the Z-direction component of the magnetic field acting on the magnetic sensor 4 is inverted between when the projection 6 of the gear-shaped magnetic body 2 is detected and when the depression 7 of the gear-shaped magnetic body 2 is detected. The intensity of the magnetic field acting on the magnetic sensor 4 generally decreases when the projection 6 is detected since the projections 6 formed of a magnetic body block the magnetic field. However, since the projection 6 formed of a magnetic body is magnetized, a magnetic field leaking from the projection 6 acts on the magnetic sensor 4. Thus, it was understood that the intensity of the Z-direction magnetic field acting on the magnetic sensor 4 did not become zero when the projection 6 was detected, but the direction of the Z-direction component of the magnetic field was inverted from that when the depression 7 was detected.

As shown in Figs. 8A to 8C, by decreasing the gap G1, it is possible to increase the intensity of magnetic field acting on the magnetic sensor 4.

In the present embodiment, a magnetic switch that generates and outputs ON/OFF signals depending on the positive/negative directions of the magnetic field shown in Fig. 5 is used as the magnetic sensor 4. Thus, when the magnetic sensor 4 detects a change in the positive/negative directions of the magnetic field shown in Figs. 8A to 8C, the magnetic sensor 4 can output the ON (or OFF) signal when the magnetic sensor 4 faces the projection 6 and output the OFF (or ON) signal when the magnetic sensor 4 faces the depression 7.

Therefore, by setting the magnetic field detection direction of the magnetic sensor 4 to the Z-direction, it is possible to detect rotation with high accuracy.

Moreover, as shown in Fig. 1, since the magnet 3 and the magnetic sensor 4 are disposed so as to be above and below the projection and depression section 8 of the gear-shaped magnetic body 2, respectively, even when the gear-shaped magnetic body 2 is eccentric and slightly shifted in the horizontal direction, for example, the effect on the Z-direction component of the magnetic field acting on the magnetic sensor 4 is insignificant. Moreover, by appropriately regulating the gaps G1 and G2 of the magnetic sensor 4 and the magnet 3 with respect to the gear-shaped magnetic body 2, it is possible to detect rotation stably and with high accuracy.

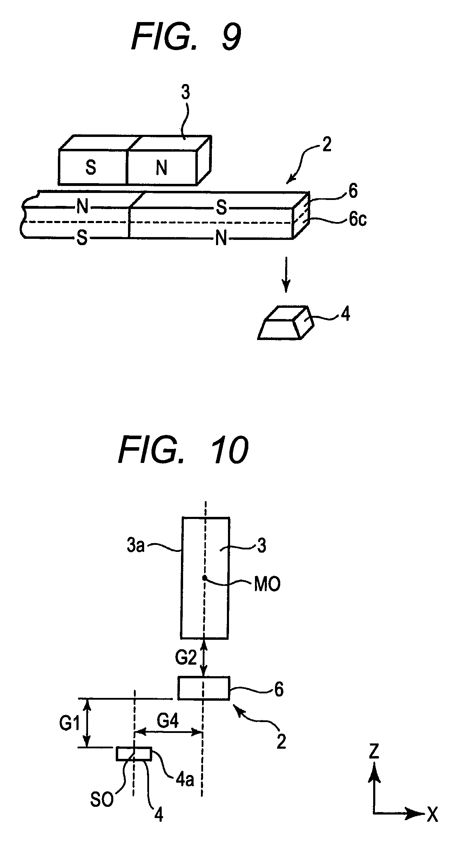

Moreover, as schematically depicted in Fig. 9, the projection 6 of the gear-shaped magnetic body 2 is considered to be magnetized as shown in Fig. 9 by the magnet 3. Thus, the vertical component (Z-direction magnetic field component) of the magnetic field leaking from the magnetized projection 6 of the gear-shaped magnetic body 2 increases. Accordingly, it is preferable to set the magnetic field detection direction of the magnetic sensor 4 to the Z-direction. Moreover, since the magnetic field component absorbed by the ring-shaped section 5 increases as the magnetized projection 6 approaches its proximal end side which is close to the ring-shaped section 5, the Z-direction magnetic field component decreases. On the other hand, the Z-direction magnetic field component increases as it approaches the distal end 6c of the projection 6. Therefore, by disposing the magnetic sensor 4 so as to be shifted closer to the distal end 6c of the projection 6 than the magnet 3, it is possible to increase the Z-direction component of the magnetic field acting on the magnetic sensor 4 and to detect rotation with higher accuracy. It should be noted that the same effect wherein the magnetic field component acting on the magnetic sensor 4 increases as it approaches the distal end 6c of the projection 6 is obtained when the magnetic field detection direction is set to the X and Y-directions described below as well as the Z-direction.

Fig. 10 is a front view of a rotation detection device according to a second embodiment. The rotation detection device shown in Fig. 10 has the same constituent elements as the rotation detection device 1 shown in Fig. 1. Moreover, the same gear-shaped magnetic body 2 and the same magnet 3 as shown in Fig. 1 are used. Although the same magnetic switch as shown in Fig. 5 is used as the magnetic sensor 4, the magnetic field detection direction is set to the X-direction. That is, the magnetization direction (indicated by the arrow P) of the fixed magnetization layer 83 of the magnetism detection elements 23 and 27 which constitute the magnetic sensor 4 is set to the X-direction.

As shown in Fig. 10, a gap G4 is formed in the X-direction between the center SO of the magnetic sensor 4 and the center MO of the magnet 3. The gap G4 is in the range of about 0 to 5 mm.

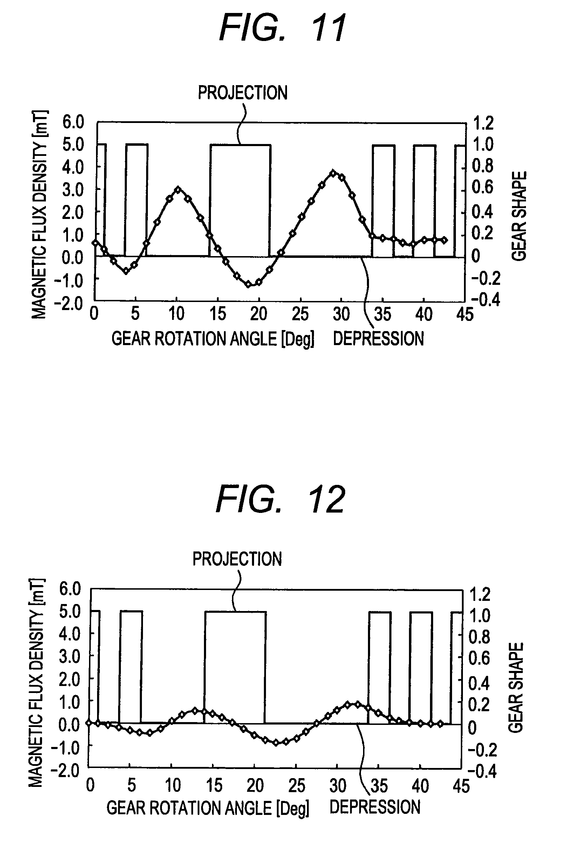

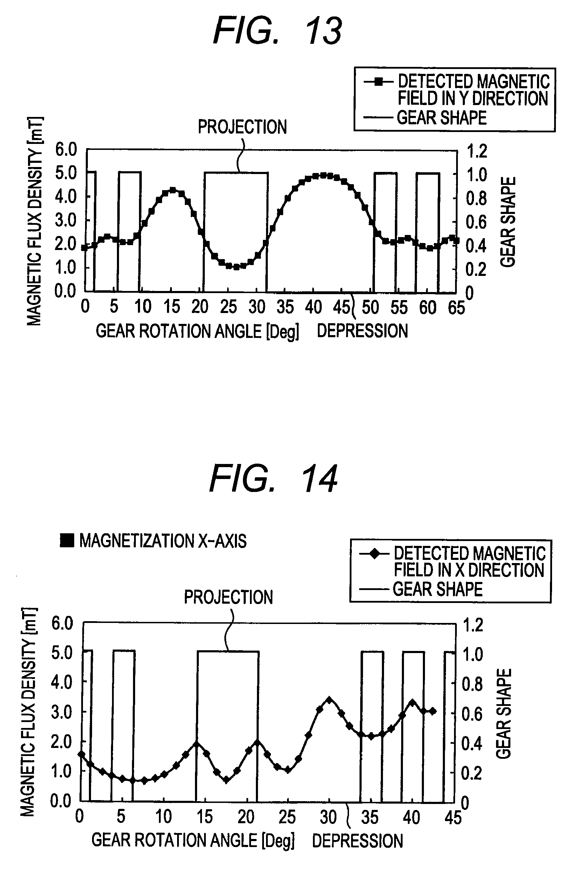

The experiment of Fig. 11 was conducted using the rotation detection device of the second embodiment shown in Fig. 10. In the embodiment of Fig. 13, the gap G1 between the magnetic sensor 4 and the projection 6 of the gear-shaped magnetic body 2 and the gap G2 between the magnet 3 and the projection 6 of the gear-shaped magnetic body 2 were fixed to 3.5 mm. Moreover, the gap G3 (see Fig. 4) in the Y-direction between the center MO of the magnet 3 and the center SO of the magnetic sensor 4 was 6 mm. The total number of projections of the gear-shaped magnetic body 2 being used was 44, the width (excluding the large-width projection 6d) of the projection 6 was 4.75 mm, and the width (excluding the large-width depressions 7a and 7b) of the depression 7 was 4.75 mm. Moreover, the width of the large-width projection 6d was 7.125 mm, and the widths of the large-width depressions 7a and 7b were 14.25 mm (T2) and 23.75mm (T3), respectively. Moreover, the gear-shaped magnetic body 2 was formed of a SUS400-series soft magnetic body and had a thickness of 1 mm. The magnet 3 being used was a sintered samarium-cobalt magnet, the length in the Y-direction was 15 mm, and the width and thickness in the Z-direction were 10 mm and 2.5 mm, respectively. Moreover, a gap G4 in the X-direction between the center MO of the magnet 3 and the center SO of the magnetic sensor 4 was set to 5 mm.

In the graph of Fig. 11, the shape of the projection and depression section 8 of the gear-shaped magnetic body 2 is also depicted by a solid line together with the gear rotation angle.

The vertical axis shown in Fig. 11 indicates an X-direction component of a magnetic field (magnetic flux density) acting on the magnetic sensor 4 when the magnet 3 faces the projection 6 and the depression 7 of the gear-shaped magnetic body 2. As shown in Fig. 11, the direction of the X-direction component of the magnetic field acting on the magnetic sensor 4 is approximately inverted between when the projection 6 of the gear-shaped magnetic body 2 is detected and when the depression 7 of the gear-shaped magnetic body 2 is detected. However, the direction of the X-direction magnetic field is not inverted in portions (small-pitch sections) in which the width of the projection 6 and the width of the depression 7 are small. Therefore, it is necessary to increase the width of the projection 6 and the depression 7 to some extent in order to detect rotation with high accuracy. Specifically, it is necessary to set the width of the projection 6 and the depression 7 to a value as large as about 10 mm to 25 mm.

When the magnetic sensor 4 was disposed to be shifted in the X-direction in relation to the magnet 3 as shown in Fig. 10, the direction of the X-direction component of the magnetic field acting on the magnetic sensor 4 was inverted as shown in Fig. 11. Therefore, by setting the magnetic field detection direction of the magnetic sensor 4 to the X-direction, it is possible to detect rotation by using the magnetic sensor (magnetic switch) 4 outputting the ON/OFF signals depending on the positive/negative directions of the X-direction magnetic field component shown in Fig. 5.

Fig. 12 shows experimental results of a comparative example when the magnetic field detection direction is set to the X-direction, and the gap G4 is set to zero.

As shown in Fig. 12, it was understood that the X-direction component of the magnetic field acting on the magnetic sensor 4 was not always inverted between when the projection 6 was detected and when the depression 7 was detected. Thus, it was understood that when the magnetic field detection direction was set to the X-direction, it is preferable to form the gap G4 in the X-direction between the center SO of the magnetic sensor 4 and the center MO of the magnet 3.

Fig. 13 is a graph showing the relation between a gear rotation angle and a Y-direction component of the magnetic field acting on the magnetic sensor. In this experiment, the gaps G1 and G2 were set to 2.5 mm and 3.5 mm, respectively. Moreover, the gaps G3 (see Fig. 4) and G4 (see Fig. 10) were set to 6 mm and 0 mm, respectively. The other conditions were the same as those of Fig. 8.

As shown in Fig. 13, although the intensity of the Y-direction component of the magnetic field acting on the magnetic sensor decreased when the projection 6 of the gear-shaped magnetic body 2 was detected and increased when the depression 7 was detected, the direction was not inverted between the positive and negative directions. Thus, it is not possible to use the magnetic switch that generates and outputs ON/OFF signals in response to inversion of the direction of the magnetic field with the magnetic field detection direction set to the Z or X-direction (for example, the magnetic switch always outputs the ON signal). Therefore, rotation is detected using other magnetic sensors (for example, a magnetic sensor or the like using the Hall element).

Fig. 14 shows experimental results of the comparative example. In Fig. 14, the magnetization direction of the magnet was set to the X-direction. Moreover, the magnetic field detection direction of the magnetic sensor was set to the X-direction. As shown in Fig. 14, it was understood that inversion or remarkable inversion of the direction of the X-direction component of the magnetic field acting on the magnetic sensor was not observed (that is, the magnetic field changed at random) between when the projection was detected and when the depression was detected, and it was not possible to detect rotation. Thus, in the present embodiment, the magnetization direction of the magnet was defined as the Y-direction.

The gaps G1 and G2 shown in Fig. 3 are preferably set to a small value in order to appropriately detect rotation. However, when comparing the gaps G1 and G2, it is preferable to set the gap G1 to the magnetic sensor 4 so as to be smaller than the gap G2 to the magnet 3 (see Figs. 8A to 8C). By doing so, it is possible to effectively increase the intensity of the magnetic field acting on the magnetic sensor 4.

As shown in Fig. 2, by providing the large-width projection 6d and the large-width depressions 7a and 7b, such portions can be used as a rotation reference section 9. That is, since the duration of the ON and OFF signals when the large-width projection 6d and the large-width depressions 7a and 7b are detected is longer than that when other portions are detected, the point of origin of rotation can be determined based on the rotation reference section in which the duration of the signals is different from that of other portions. For example, the central position of the large-width projection 6d can be determined as the point of origin. Moreover, since the widths T2 and T2 of the large-width depressions 7a and 7b are different as shown in Fig. 2, it is possible to detect the rotation direction from the obtained pulse signal waveform, that is, whether the rotation direction is clockwise (CW) or counter-clockwise (CCW). In addition, although one large-width projection 6d and one large-width depression positioned nearby can sufficiently serve as the rotation reference section 9, it is easy to define the point of origin of rotation by providing the large-width depressions 7a and 7b on both sides of the large-width projection 6d as shown in Fig. 2.

Moreover, in the above embodiments, although the gear-shaped magnetic body 2 is disposed on the rotating side and the magnet 3 and the magnetic sensor 4 are disposed on the stationary side, they may be disposed in an opposite manner. Reference Signs List

- G1 to G4:: GAP
- MO:: CENTER OF MAGNET
- SO:: CENTER OF MAGNETIC SENSOR
- 1:: ROTATION DETECTION DEVICE
- 2:: GEAR-SHAPED MAGNETIC BODY
- 3:: MAGNET
- 4:: MAGNETIC SENSOR
- 6:: PROJECTION
- 7:: DEPRESSION
- 8:: PROJECTION AND DEPRESSION SECTION
- 9:: ROTATION REFERENCE SECTION
- 23, 27:: MAGNETIC DETECTION ELEMENT
- 35:: DIFFERENTIAL AMPLIFIER
- 38:: COMPARATOR
- 40:: EXTERNAL OUTPUT TERMINAL
- 82:: ANTI-FERROMAGNETIC LAYER
- 83:: FIXED MAGNETIZATION LAYER
- 84:: NON-MAGNETIC LAYER
- 85:: FREE MAGNETIZATION LAYER

## Claims

1. A rotation detection device comprising:
a gear-shaped magnetic body including an upper surface, a lower surface, an outer circumferential side surface that connects outer circumferential edges of the upper and lower surfaces, and projections arranged at intervals in a relative rotation direction of the outer circumferential side surface so as to project in a direction away from a center of relative rotation which is at the center of the upper and lower surfaces; and
a magnetic sensor which is disposed at one side of upper and lower sides of a projection and depression section in which the projections of the gear-shaped magnetic body and depressions positioned between the projections are continuous in the relative rotation direction, and includes a magnetism detection element of which the electrical property changes in response to a magnetic field; and
a magnet which is disposed at the other side of the upper and lower sides of the projection and depression section in proximity to the magnetic sensor in a height direction thereof, and in which a pair of the magnetic sensor and the magnet constitutes a stationary side or a movable side,
wherein the magnet is magnetized in a direction parallel to a radial direction which extends from the center of relative rotation of the gear-shaped magnetic body toward the outer circumferential edge, and
wherein the rotation detection device is capable of detecting rotation based on the output of the magnetic sensor which varies in response to a change in a magnetic field acting on the magnetic sensor between when the projection of the gear-shaped magnetic body is detected and when the depression of the gear-shaped magnetic body is detected.

2. The rotation detection device according to claim 1,
wherein the magnetic sensor is a magnetic switch that generates ON/OFF signals depending on positive/negative directions of the magnetic field, and
wherein when a height direction from the center of the magnetic sensor is a Z-direction, a direction parallel to the radial direction of the gear-shaped magnetic body, passing through the center of the magnetic sensor is a Y-direction, and a direction orthogonal to both the Z and Y-directions is an X-direction, the magnetic sensor is disposed so that the magnetic field detection direction thereof is the Z-direction.

3. The rotation detection device according to claim 1,
wherein the magnetic sensor is a magnetic switch that generates ON/OFF signals depending on positive/negative directions of the magnetic field,
wherein when a height direction from the center of the magnetic sensor is a Z-direction, a direction parallel to the radial direction of the gear-shaped magnetic body, passing through the center of the magnetic sensor is a Y-direction, and a direction orthogonal to both the Z and Y-directions is an X-direction, the magnetic sensor is disposed so that the magnetic field detection direction thereof is the X-direction, and
wherein a gap in the X-direction is formed between the center of the magnetic sensor and the center of the magnet.

4. The rotation detection device according to any one of claims 1 to 3,
wherein the magnetic sensor is disposed to be shifted with respect to the magnet so that the center of the magnetic sensor is positioned closer to a distal end of the projection and depression section of the gear-shaped magnetic body than the center of the magnet.

5. The rotation detection device according to any one of claims 1 to 4,
wherein a gap G1 in the height direction between the magnetic sensor and the projection of the gear-shaped magnetic body is smaller than a gap G2 in the height direction between the magnet and the projection of the gear-shaped magnetic body.

6. The rotation detection device according to any one of claims 1 to 5,
wherein a rotation reference section in which a width between the projection and the adjacent depression is different from a width between the other projections and depressions is formed in the projection and depression section that is formed in the gear-shaped magnetic body.

## Amended claims

### Amended claims under Art. 19.1 PCT

**1.** (Amended) A rotation detection device comprising:
a gear-shaped magnetic body including an upper surface, a lower surface, an outer circumferential side surface that connects outer circumferential edges of the upper and lower surfaces, and projections arranged at intervals in a relative rotation direction of the outer circumferential side surface so as to project in a direction away from a center of relative rotation which is at the center of the upper and lower surfaces; and
a magnetic sensor which is disposed at one side of upper and lower sides of a projection and depression section in which the projections of the gear-shaped magnetic body and depressions positioned between the projections are continuous in the relative rotation direction, and includes a magnetism detection element of which the electrical property changes in response to a magnetic field; and
a magnet which is disposed at the other side of the upper and lower sides of the projection and depression section in proximity to the magnetic sensor in a height direction thereof, and in which a pair of the magnetic sensor and the magnet constitutes a stationary side or a movable side,
wherein the magnet is magnetized in a direction parallel to a radial direction which extends from the center of relative rotation of the gear-shaped magnetic body toward the outer circumferential edge,
wherein the magnetic sensor is a magnetic switch that generates ON/OFF signals depending on positive/negative directions of the magnetic field,
wherein when a height direction from the center of the magnetic sensor is a Z-direction, a direction parallel to the radial direction of the gear-shaped magnetic body, passing through the center of the magnetic sensor is a Y-direction, and a direction orthogonal to both the Z and Y-directions is an X-direction, the magnetic sensor is disposed so that the magnetic field detection direction thereof is the Z-direction, and
wherein the rotation detection device is capable of detecting rotation based on the output of the magnetic sensor which varies in response to a change in a magnetic field acting on the magnetic sensor between when the projection of the gear-shaped magnetic body is detected and when the depression of the gear-shaped magnetic body is detected.

**2.** (Amended) A rotation detection device comprising:
a gear-shaped magnetic body including an upper surface, a lower surface, an outer circumferential side surface that connects outer circumferential edges of the upper and lower surfaces, and projections arranged at intervals in a relative rotation direction of the outer circumferential side surface so as to project in a direction away from a center of relative rotation which is at the center of the upper and lower surfaces; and
a magnetic sensor which is disposed at one side of upper and lower sides of a projection and depression section in which the projections of the gear-shaped magnetic body and depressions positioned between the projections are continuous in the relative rotation direction, and includes a magnetism detection element of which the electrical property changes in response to a magnetic field; and
a magnet which is disposed at the other side of the upper and lower sides of the projection and depression section in proximity to the magnetic sensor in a height direction thereof, and in which a pair of the magnetic sensor and the magnet constitutes a stationary side or a movable side,
wherein the magnet is magnetized in a direction parallel to a radial direction which extends from the center of relative rotation of the gear-shaped magnetic body toward the outer circumferential edge,
wherein the magnetic sensor is a magnetic switch that generates ON/OFF signals depending on positive/negative directions of the magnetic field,
wherein when a height direction from the center of the magnetic sensor is a Z-direction, a direction parallel to the radial direction of the gear-shaped magnetic body, passing through the center of the magnetic sensor is a Y-direction, and a direction orthogonal to both the Z and Y-directions is an X-direction, the magnetic sensor is disposed so that the magnetic field detection direction thereof is the X-direction,
wherein a gap in the X-direction is formed between the center of the magnetic sensor and the center of the magnet, and
wherein the rotation detection device is capable of detecting rotation based on the output of the magnetic sensor which varies in response to a change in a magnetic field acting on the magnetic sensor between when the projection of the gear-shaped magnetic body is detected and when the depression of the gear-shaped magnetic body is detected.

**3.** (Amended) The rotation detection device according to claim 1 or 2,
wherein the magnetic sensor is disposed to be shifted with respect to the magnet so that the center of the magnetic sensor is positioned closer to a distal end of the projection and depression section of the gear-shaped magnetic body than the center of the magnet.

**4.** (Amended) The rotation detection device according to any one of claims 1 to 3,
wherein a gap G1 in the height direction between the magnetic sensor and the projection of the gear-shaped magnetic body is smaller than a gap G2 in the height direction between the magnet and the projection of the gear-shaped magnetic body.

**5.** (Amended) The rotation detection device according to any one of claims 1 to 4,
wherein a rotation reference section in which a width between the projection and the adjacent depression is different from a width between the other projections and depressions is formed in the projection and depression section that is formed in the gear-shaped magnetic body.

**6.** (Canceled)
